# EUROPEAN PATENT SPECIFICATION

(11) **EP 3 363 520 B1**
(45) Date of publication and mention of the grant of the patent: **25.01.2023**
(21) Application number: 18155162.3
(22) Date of filing: 05.02.2018
(51) Int. Cl.: B01D 45/16, B01D 53/00, B01D 53/24

(54) **GAS-LIQUID SEPARATION DEVICE AND METHOD**
VORRICHTUNG UND VERFAHREN ZUR GAS-FLÜSSIGKEIT-TRENNUNG
PROCÉDÉ ET DISPOSITIF DE SÉPARATION GAZ-LIQUIDE

(30) Priority: 17.02.2017 CN 201710086184
(43) Date of publication of application: 22.08.2018
(73) Proprietor: Baker Hughes Oilfield Operations, LLC, Houston, Texas 77073 (US)
(72) Inventor: XUE, Junli, Shanghai, Shanghai 201203 (CN); HU, Lishun, Shanghai, Shanghai 201203 (CN); ZHANG, Jie, Shanghai, Shanghai 201203 (CN); LV, Jing, Shanghai, Shanghai 201203 (CN); YANG, Yong, Shanghai, Shanghai 201100 (CN); YU, Liang, Shanghai, Shanghai 201203 (CN)
(74) Representative: Novagraaf Group

(56) References cited:
- WO-A1-01/21286
- CN-A- 106 166 414
- US-A- 3 528 221
- US-A1- 2002 194 988
- US-A1- 2012 180 668
- US-B1- 6 962 199

## Description

### TECHNICAL SCOPE

The present invention relates to a gas-liquid separation device and method, and in particular to a device and method that convert gas into liquid and thus separate the gas from the liquid.

### TECHNICAL BACKGROUND

US 2002/194988 A1 discloses a conduit having a subsonic inlet, a nozzle, a supersonic passageway, a diffuser, a subsonic passageway, an outlet and a separated component outlet.

Condensers using supersonic technology have been widely applied in the industry. Specifically, the condenser converts a particular component of a mixed fluid in a gaseous state into liquid, and further separates the particular component in the liquid state from the original mixed fluid in the gaseous state. Such a condenser generally consists of an outer tube with a circular cross section and an inner tube which is located inside of the outer tube and is coaxial with the outer tube. That is, the condenser presents a "tube-in-tube" structure, where there is a gap between the outer tube and the inner tube. The converted liquid fluid will be uniformly distributed on the inner wall of the outer tube under the effect of a centrifugal force, and flow out of the condenser along the inner wall of the outer tube. Meanwhile, most of the unconverted gaseous fluid will be discharged out of the condenser along the inner tube, while a small part of the gaseous fluid will be discharged out of the condenser through the gap between the inner tube and the outer tube. It is understandable that the unconverted gaseous fluid will inevitably mix with the converted liquid fluid and be discharged through the same path, thus affecting the efficiency of gas-liquid separation. In addition, the "tube-in-tube" structure requires relatively high assembly precision and a relatively complex processing technique, both of which increase production and manufacturing costs.

Therefore, there is demand for a new and improved gas-liquid separation device and a corresponding gas-liquid separation method, so as to implement more efficient separation of a gaseous fluid from a liquid fluid, and also to implement easy mounting and maintenance of the separation device, thus effectively reducing production and manufacturing costs.

### SUMMARY

The present invention is defined in the accompanying claims.

A first embodiment of the present invention provides a gas-liquid separation device including: a vortex generating region, used for receiving a gaseous fluid and providing a gaseous vortex; a fluid conversion region, used for receiving the gaseous vortex and providing a liquid fluid; and a fluid separation region that includes a first fluid passage for receiving the liquid fluid and a second fluid passage for receiving the gaseous fluid which is not converted into the liquid fluid, where a cross section of the fluid separation region has a first width and a second width, the first width is greater than the second width, and the first fluid passage is connected with the second fluid passage at the position of the first width.

A second embodiment of the present invention provides a gas-liquid separation method including: receiving a gaseous fluid through a vortex generating region and providing a gaseous vortex; receiving the gaseous vortex through a fluid conversion region and providing a liquid fluid; receiving the liquid fluid through the first fluid passage of a fluid separation region and receiving, through the second fluid passage of the fluid separation region, the gaseous fluid which is not converted into the liquid fluid, where a cross section of the fluid separation region has a first width and a second width, the first width is greater than the second width, and the first fluid passage is connected with the second fluid passage at the position of the first width.

### BRIEF DESCRIPTION OF DRAWINGS

The following detailed description with reference to accompanying drawings can help clarify the features, aspects, and advantages of the present invention, where:
FIG. 1 is a schematic structural diagram of a gas-liquid separation device according to a specific embodiment of the present invention;
FIG. 2 is a schematic structural diagram of a cross section along direction A-A in FIG. 1; and
FIG. 3 is a schematic flowchart of a gas-liquid separation method according to a specific embodiment of the present invention.

### PREFERRED EMBODIMENTS

The following is a description of one or more preferred embodiments of the present invention.

Unless otherwise defined, the technical and scientific terms in the claims and the specification are used as they normally understood by those skilled in the techniques to which the present invention pertains. "First", "second", and similar words used in this specification and in the claims do not denote any order, quantity, or importance, but are merely intended to distinguish between different constituents. The terms "one", "a", and the like are not meant to be limiting, but rather denote the presence of at least one. The term "or" includes any one of the listed items. The terms "including", "comprising", and the like are intended to mean that the presence of an element or thing preceded by the word "including" or "comprising" encompasses elements or objects listed after "including" or "comprising", and does not exclude other elements or objects.

The present invention relates to a gas-liquid separation device, which includes an improved gas-liquid separation structure, so that the efficiency of gas-liquid separation is effectively improved. Meanwhile, the improved gas-liquid separation structure can also simplify an assembly process, effectively reducing production and manufacturing costs.

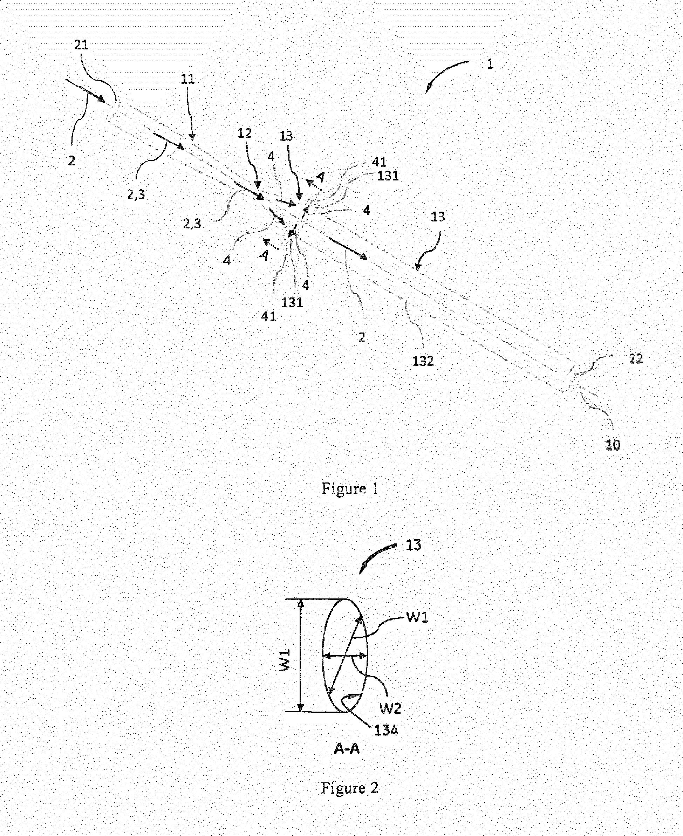

FIG. 1 is a schematic structural diagram of a gas-liquid separation device according to a specific embodiment of the present invention. As shown in FIG. 1, the gas-liquid separation device 1 is shaped as a hollow tube, and can allow a gaseous fluid, a liquid fluid, or a gas-liquid mixed fluid to flow therein. The central axis 10 along gas-liquid separation device 1 includes a vortex generation region 11, a fluid conversion region 12, and a fluid separation region 13 that are connected in sequence.

The vortex generation region 11 can receive a gaseous fluid 2 and provide a gaseous vortex 3. One opening of the vortex generation region 11 includes a gaseous fluid entrance 21 for receiving the gaseous fluid 2. It can be understood that the gaseous fluid 2 may include a single gas component, or may include two or more gas components having different condensation points. In some embodiments, the gaseous fluid 2 comes from a combustion process, a gasification process, or a combination thereof. The gaseous fluid 2 is accelerated in the vortex generation region 11 to reach the velocity of sound, so that a portion of or most of the gaseous fluid 2 is converted to a gaseous vortex 3. The generated gaseous vortex 3 obtains a centrifugal torque under the effect of the velocity of sound. The "velocity of sound" can be understood to represent the velocity of 1 Mach.

In some embodiments, the tube diameter of the vortex generation region 11 continuously reduces from the position of the gaseous fluid entrance 21. Therefore, the kinetic energy of the gaseous vortex 3 that flows at the velocity of sound will change in the vortex generation region 11, and the static temperature of the gaseous vortex 3 will be decreased accordingly.

In some embodiments, the cross section of the vortex generation region 11 may be a plane having a length and a width that are different, such as an ellipse or a polygon. Alternatively, the cross section of the vortex generation region 11 may also be a plane having a length and a width that are the same, such as a circle or a regular polygon. In the drawings of the present invention, the cross section of the vortex generation region 11 is shown as an ellipse.

The fluid conversion region 12 can receive the gaseous vortex 3 and provide a liquid fluid 4. The gaseous vortex 3 generated by the vortex generation region 11 is guided to the fluid conversion region 12 and maintains the velocity of sound in the fluid conversion region 12.

The fluid conversion region 12 has the minimum tube diameter among all regions of the gas-liquid separation device 1 along the central axis 10. Due to the change in the tube diameter from the vortex generation region 11 to the fluid conversion region 12, the static temperature of the gaseous vortex 3 that keeps flowing at the velocity of sound will be further decreased in the fluid conversion region 12. When the static temperature is decreased to a condensation point of a certain gaseous component, part of the gas will start to become liquid, thus generating a liquid fluid 4.

In some embodiments, the cross section of the fluid conversion region 12 may be a plane having a length and a width that are different, such as an ellipse or a polygon. Alternatively, the cross section of the fluid conversion region 12 may also be a plane having a length and a width that are the same, such as a circle or a regular polygon. In the drawings of the present invention, the cross section of the fluid conversion region 12 is shown as an ellipse.

The fluid separation region 13 can receive the liquid fluid 4 and the gaseous fluid 2 not converted into the liquid fluid 4, and separate the liquid fluid 4 from the gaseous fluid 2.

In some embodiments, the gaseous fluid 2 in the fluid separation region 13 can be accelerated to reach a supersonic speed, so that the kinetic energy of the gaseous fluid 2 changes, thereby decreasing the static temperature thereof. When the static temperature is decreased to a condensation point of a certain gaseous component, the gas starts to become liquid. "Supersonic speed" can be understood to represent a speed greater than 1 Mach.

In the fluid separation region 13, the gas-liquid mixed fluid moving at supersonic speed obtains a centrifugal torque. It can be understood that under the effect of the centrifugal torque, the liquid fluid having a higher density is separated from the gaseous fluid having a lower density, that is, the liquid fluid 4 is separated from the gaseous vortex 3 and the gaseous fluid 2 not converted into the liquid fluid 4. Further, the liquid fluid 4 will flow along the inner wall of the fluid separation region 13 under the centrifugal effect.

The cross section of the fluid separation region 13 is a plane having a length and a width that are different, such as an ellipse.

With reference to FIG. 2, the cross section of the fluid separation region 13 along the central axis 10 is elliptical, and has a first width W1 and a second width W2, the first width W1 being greater than the second width W2. Therefore, the liquid fluid 4 will be gathered at the position of the first width W1 under the centrifugal effect, thus achieving a desirable gas-liquid separation effect.

In some embodiments, the tube diameter of the fluid separation region 13 can increase continuously along the central axis 10 starting from the joint between the fluid separation region 13 and the fluid conversion region 12. A first fluid passage 131 and a second fluid passage 132 are mounted at the position of the first width W1 corresponding to the maximum tube diameter of the fluid separation region 13 so as to receive the liquid fluid 4 and the gaseous fluid 2 not converted into the liquid fluid, respectively. Further, the first fluid passage 131 is formed on an outer side wall of the second fluid passage 132. The central axes of the first fluid passage 131 and the second fluid passage 132 intersect with each other. Specifically, the first fluid passage 131 presents a branch structure, and extends from the front and tail ends of the first width W1 which corresponds to the maximum tube diameter of the fluid separation region 13. The second fluid passage 132 has the same central axis 10 as the fluid conversion region 12, and presents a continuous tubular structure on the same central axis 10. In addition, a liquid fluid exit 41 is formed at one end of the first fluid passage 131 to discharge the liquid fluid 4, and a gaseous fluid exit 22 is formed at one opening of the second fluid passage 132 to discharge the gaseous fluid 2.

In some embodiments, the tube diameter of the fluid separation region 13 may remain basically constant along the central axis 10 (not shown in the figure). The first fluid passage 131 presenting a branch tube structure is mounted at the position of the first width W1 of the cross section of the fluid separation region 13, so as to receive the liquid fluid 4. The second fluid passage 132 presenting a continuous tubular structure is mounted along the central axis 10 of the fluid separation region 13, to receive the gaseous fluid 2 not converted into the liquid fluid 4.

In some embodiments, the shapes of the cross sections of the first fluid passage 131 and the second fluid passage 132 can be circular, elliptical, polygonal, or the like.

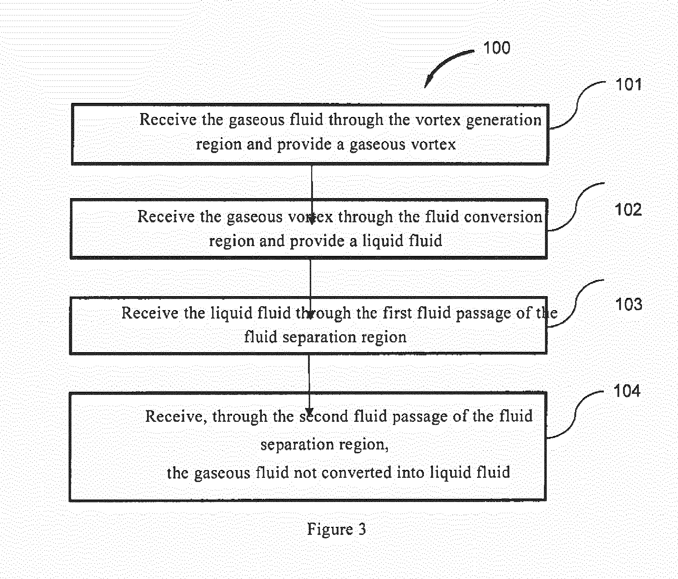

According to the specific embodiments of the present invention, a gas-liquid separation method is further provided. Referring to FIG. 3, the method 100 for implementing gas-liquid separation includes the following steps:
Step 101: receiving a gaseous fluid 2 through vortex generating region 11 and providing a gaseous vortex 3; Step 102: receiving the gaseous vortex 3 through fluid conversion region 12 and providing a liquid fluid 4; Step 103: receiving the liquid fluid 4 through the first fluid passage 131 of fluid separation region 13; and Step 104: receiving, through the second fluid passage 132 of fluid separation region 13, the gaseous fluid 2 which is not converted into liquid fluid, where a cross section of the fluid separation region 13 has a first width W1 and a second width W2, the first width W1 is greater than the second width W2, and the first fluid passage 131 is connected with the second fluid passage 132 at the position of the first width W1.

Further, the fluid conversion region 12 and the fluid separation region 13 have the same central axis 10. The cross section of the fluid separation region 13 along the central axis 10 is an ellipse. At the first width W1 of the ellipse, the first fluid passage 131 is connected with the second fluid passage 132. Moreover, the first fluid passage 131 extends on the outer side wall of the second fluid passage 132 to form a branch structure.

Therefore, the gas-liquid separation device and method provided in the present invention improve the gas-liquid separation structure, so that the liquid fluid is gathered at a particular position more easily and so that the non-condensed gaseous fluid does not leak easily, thus effectively improving the efficiency of separating the liquid fluid from the non-condensed gaseous fluid. Meanwhile, the improved gas-liquid separation structure can also simplify the assembly process, effectively reducing production and manufacturing costs.

Although the present invention is explained based on specific embodiments, it is to be understood that the invention is defined by the appended claims.

## Claims

1. An apparatus (1) for gas-liquid separation, the apparatus comprising:
a cyclonic fluid generation section (11), a fluid conversion section (12) and a fluid separation section (13) having a same central axis (10) and being connected in sequence along said central axis (10);
the cyclonic fluid generation section (11) being for receiving a gas fluid (2) and providing a cyclonic fluid by accelerating the gas fluid (2) to reach the velocity of sound, so that a portion of or most of the gas fluid (2) is converted to a gaseous vortex;
the fluid conversion section (12) being for receiving the cyclonic fluid and providing a liquid fluid (4) and having a minimum tube diameter among all sections of the apparatus (1) along the central axis (10), such that a change in tube diameter from the cyclonic fluid generation section (11) to the fluid conversion section (12) decreases the static temperature of the gaseous vortex that keeps flowing at the velocity of sound to a condensation point of a gaseous component generating the liquid fluid (4); and
the fluid separation section (13) comprising: a first fluid passage (131) for receiving the liquid fluid (4); and a second fluid passage (132) for receiving the gas fluid (2) that is not converted to be the liquid fluid, the second fluid passage (132) having the same central axis (10) as the fluid conversion region (12) and presenting a continuous tubular structure on the central axis (10), the first fluid passage (131) being formed on an outer side wall of the second fluid passage (132), a liquid fluid exit (41) being formed at one end of the first fluid passage (131) to discharge the liquid fluid (4) and a gaseous fluid exit (22) being formed at one opening of the second fluid passage (132) to discharge the gaseous fluid (2);
wherein the second fluid passage (132) is elliptical in cross-section;
wherein a transversal cross-section of the fluid separation section (13) has a first width (W1) and a second width (W2), the first width (W1) is larger than the second width (W2) and is a maximum width of the cross-section of the fluid separation section (13), and **characterized in that** the first fluid passage (131) is communicated with the second fluid passage (132) where the first maximum width (W1) is, wherein the first fluid passage (131) extends outwards from the outer surface of the second fluid passage (132) and the first fluid passage (131) presents a branch structure extending from front and tail ends of the first maximum width (W1) of the fluid separation section (13).

2. The apparatus of claim 1, wherein the fluid conversion section (12) is elliptical in cross-section.

3. The apparatus of claim 1 or claim 2, wherein the cyclonic fluid generation section (11) is elliptical in cross-section.

4. The apparatus of any preceding claim, wherein the liquid fluid flows into the first fluid passage (131) along an internal surface of the fluid separation section (13).

5. The apparatus of any preceding claim, further comprising:
a gas fluid inlet (21) formed in an opening of the cyclonic fluid generation section (11).

6. A method for gas-liquid separation using the apparatus of any preceding claim, the method comprising:
receiving a gas fluid and providing a cyclonic fluid through the cyclonic fluid generation section (11);
receiving the cyclonic fluid and providing a liquid fluid through the fluid conversion section (12);
receiving the liquid fluid through the first fluid passage (131) of the fluid separation section (13); and
receiving the gas fluid that is not converted to be the liquid fluid through the second fluid passage (132) of the fluid separation section (13).

## Patentansprüche

1. Vorrichtung (1) für eine Gas-Flüssig-Abscheidung, die Vorrichtung umfassend:
einen Zyklonfluiderzeugungsabschnitt (11), einen Fluidumwandlungsabschnitt (12) und einen Fluidabscheidungsabschnitt (13), die eine gleiche Mittelachse (10) aufweisen und der Reihe nach entlang der Mittelachse (10) verbunden sind;
wobei der Zyklonfluiderzeugungsabschnitt (11) zum Aufnehmen eines Gasfluids (2) und Bereitstellen eines Zyklonfluids durch Beschleunigen des Gasfluids (2) dient, um die Schallgeschwindigkeit zu erreichen, so dass ein Anteil oder ein Großteil des Gasfluids (2) in einen gasförmigen Wirbel umgewandelt wird;
wobei der Fluidumwandlungsabschnitt (12) zum Aufnehmen des Zyklonfluids und Bereitstellen eines flüssigen Fluids (4) dient und einen minimalen Rohrdurchmesser unter allen Abschnitten der Vorrichtung (1) entlang der Mittelachse (10) derart aufweist, dass eine Änderung des Rohrdurchmessers von dem Zyklonfluiderzeugungsabschnitt (11) zu dem Fluidumwandlungsabschnitt (12) die statische Temperatur des gasförmigen Wirbels verringert, der mit der Schallgeschwindigkeit weiterhin zu einem Kondensationspunkt einer gasförmigen Komponente strömt, die das flüssige Fluid (4) erzeugt; und
der Fluidabscheidungsabschnitt (13) umfassend: einen ersten Fluidkanal (131) zum Aufnehmen des flüssigen Fluids (4); und einen zweiten Fluidkanal (132) zum Aufnehmen des Gasfluids (2), das nicht umgewandelt wird, um das flüssige Fluid zu sein, wobei der zweite Fluidkanal (132) die gleiche Mittelachse (10) wie der Fluidumwandlungsbereich (12) aufweist und eine fortlaufende rohrförmige Struktur auf der Mittelachse (10) vorweist, wobei der erste Fluidkanal (131) an einer äußeren Seitenwand des zweiten Fluidkanals (132) ausgebildet ist, ein Auslass (41) für flüssiges Fluid an einem Ende des ersten Fluidkanals (131) ausgebildet ist, um das flüssige Fluid (4) abzulassen, und ein Auslass (22) für gasfömiges Fluid an einer Öffnung des zweiten Fluidkanals (132) ausgebildet ist, um das gasförmige Fluid (2) abzulassen;
wobei der zweite Fluidkanal (132) im Querschnitt elliptisch ist;
wobei ein transversaler Querschnitt des Fluidabscheidungsabschnitts (13) eine erste Breite (W1) und eine zweite Breite (W2) aufweist, die erste Breite (W1) größer als die zweite Breite (W2) ist und eine maximale Breite des Querschnitts des Fluidabscheidungsabschnitts (13) ist, und **dadurch gekennzeichnet, dass** der erste Fluidkanal (131) mit dem zweiten Fluidkanal (132) verbunden ist, wo die erste maximale Breite (W1) ist, wobei sich der erste Fluidkanal (131) von der äußeren Oberfläche des zweiten Fluidkanals (132) nach außen erstreckt, und der erste Fluidkanal (131) eine Verzweigungsstruktur vorweist, die sich von dem vorderen und dem hinteren Ende der ersten maximalen Breite (W1) des Fluidabscheidungsabschnitts (13) erstreckt.

2. Vorrichtung nach Anspruch 1, wobei der Fluidumwandlungsabschnitt (12) im Querschnitt elliptisch ist.

3. Vorrichtung nach Anspruch 1 oder 2, wobei der Zyklonfluiderzeugungsabschnitt (11) im Querschnitt elliptisch ist.

4. Vorrichtung nach einem der vorstehenden Ansprüche, wobei das flüssige Fluid entlang einer Innenoberfläche des Fluidabscheidungsabschnitts (13) in den ersten Fluidkanal (131) strömt.

5. Verfahren nach einem der vorstehenden Ansprüche, ferner umfassend:
einen Gasfluideinlass (21), der in einer Öffnung des Zyklonfluiderzeugungsabschnitts (11) ausgebildet ist.

6. Verfahren für die Gas-Flüssig-Abscheidung unter Verwendung der Vorrichtung nach einem der vorstehenden Ansprüche, das Verfahren umfassend:
Aufnehmen eines Gasfluids und Bereitstellen eines Zyklonfluids durch den Zyklonfluiderzeugungsabschnitt (11);
Aufnehmen des Zyklonfluids und Bereitstellen eines flüssigen Fluids durch den Fluidumwandlungsabschnitt (12);
Aufnehmen des flüssigen Fluids durch den ersten Fluidkanal (131) des Fluidabscheidungsabschnitts (13); und
Aufnehmen des Gasfluids, das nicht umgewandelt wird, um das flüssige Fluid zu sein, durch den zweiten Fluidkanal (132) des Fluidabscheidungsabschnitts (13).

## Revendications

1. Appareil (1) pour la séparation gaz-liquide, l'appareil comprenant :
une section de génération de fluide cyclonique (11), une section de conversion de fluide (12) et une section de séparation de fluide (13) ayant un même axe central (10) et étant reliées dans l'ordre le long dudit axe central (10) ;
la section de génération de fluide cyclonique (11) étant destinée à recevoir un fluide gazeux (2) et à fournir un fluide cyclonique en accélérant le fluide gazeux (2) pour atteindre la vitesse du son, de sorte qu'une partie ou la majeure partie du fluide gazeux (2) soit convertie en un tourbillon gazeux ;
la section de conversion de fluide (12) étant destinée à recevoir le fluide cyclonique et à fournir un fluide liquide (4) et ayant un diamètre de tube minimal parmi toutes les sections de l'appareil (1) le long de l'axe central (10), de sorte qu'un changement de diamètre de tube de la section de génération de fluide cyclonique (11) à la section de conversion de fluide (12) diminue la température statique du tourbillon gazeux qui continue de s'écouler à la vitesse du son jusqu'à un point de condensation d'un composant gazeux générant le fluide liquide (4) ; et
la section de séparation de fluide (13) comprenant : un premier passage de fluide (131) pour recevoir le fluide liquide (4) ; et un deuxième passage de fluide (132) pour recevoir le fluide gazeux (2) qui n'est pas converti en fluide liquide, le deuxième passage de fluide (132) ayant le même axe central (10) que la région de conversion de fluide (12) et présentant une structure tubulaire continue sur l'axe central (10), le premier passage de fluide (131) étant formé sur une paroi latérale externe du deuxième passage de fluide (132), une sortie de fluide liquide (41) étant formée au niveau d'une extrémité du premier passage de fluide (131) pour évacuer le fluide liquide (4) et une sortie de fluide gazeux (22) étant formée au niveau d'une ouverture du deuxième passage de fluide (132) pour évacuer le fluide gazeux (2) ;
dans lequel le deuxième passage de fluide (132) a une section transversale elliptique ;
dans lequel une section transversale de la section de séparation de fluide (13) a une première largeur (W1) et une deuxième largeur (W2), la première largeur (W1) est supérieure à la deuxième largeur (W2) et est une largeur maximale de la section transversale de la section de séparation de fluide (13), et **caractérisé en ce que** le premier passage de fluide (131) est en communication avec le deuxième passage de fluide (132) où se trouve la première largeur maximale (W1), où le premier passage de fluide (131) s'étend vers l'extérieur à partir de la surface externe du deuxième passage de fluide (132) et le premier passage de fluide (131) présente une structure de branche s'étendant à partir d'extrémités avant et arrière de la première largeur maximale (W1) de la section de séparation de fluide (13).

2. Appareil selon la revendication 1, dans lequel la section de conversion de fluide (12) a une section transversale elliptique.

3. Appareil selon la revendication 1 ou la revendication 2, dans lequel la section de génération de fluide cyclonique (11) a une section transversale elliptique.

4. Appareil selon l'une quelconque revendication précédente, dans lequel le fluide liquide s'écoule dans le premier passage de fluide (131) le long d'une surface interne de la section de séparation de fluide (13).

5. Appareil selon l'une quelconque revendication précédente, comprenant en outre :
une entrée de fluide gazeux (21) formée dans une ouverture de la section de génération de fluide cyclonique (11).

6. Procédé pour la séparation gaz-liquide utilisant l'appareil selon l'une quelconque revendication précédente, le procédé comprenant :
la réception d'un fluide gazeux et la fourniture d'un fluide cyclonique à travers la section de génération de fluide cyclonique (11) ;
la réception du fluide cyclonique et la fourniture d'un fluide liquide à travers la section de conversion de fluide (12) ;
la réception du fluide liquide à travers le premier passage de fluide (131) de la section de séparation de fluide (13) ; et
la réception du fluide gazeux qui n'est pas converti en fluide liquide à travers le deuxième passage de fluide (132) de la section de séparation de fluide (13).
